# EUROPÄISCHE PATENTSCHRIFT

(11) **EP 2 903 789 B1**
(45) Veröffentlichungstag und Bekanntmachung des Hinweises auf die Patenterteilung: **07.12.2016**
(21) Anmeldenummer: 13785343.8
(22) Anmeldetag: 02.10.2013
(51) Int. Cl.: B25J 17/02

(54) **INDUSTRIEROBOTER**
INDUSTRIAL ROBOT
ROBOT INDUSTRIEL

(30) Priorität: 02.10.2012 DE 102012019324
(43) Veröffentlichungstag der Anmeldung: 12.08.2015
(73) Patentinhaber: MAJAtronic GmbH, 77694 Kehl-Goldscheuer (DE)
(72) Erfinder: ILCH, Hartmut, D-77694 Kehl (DE)
(74) Vertreter: Geitz Truckenmüller Lucht
(86) Internationale Anmeldenummer: PCT/DE2013/000560
(87) Internationale Veröffentlichungsnummer: WO 2014/053115

(56) Entgegenhaltungen:
- US-A1- 2010 206 120
- US-A1- 2012 118 097

## Beschreibung

Die Erfindung geht aus von einem Industrieroboter mit Parallelkinematik, welcher mit einer Roboterbasis, mit einem als Aufnahme für einen Greifer oder ein Werkzeug dienenden Trägerelement und mit mehreren Betätigungseinheiten zum Bewegen des Trägerelements ausgestattet ist.

Derartige Industrieroboter mit Parallelkinematik dienen zum Bewegen, Positionieren und/ oder Bearbeiten eines Gegenstands im Raum. Sie sind mit einer ortsfest angeordneten Roboterbasis und einem beweglichen Trägerelement zur Aufnahme eines Greifers, eines Werkzeugs oder eines Maschinenelements ausgestattet. Mindestens zwei Betätigungseinheiten sind mit einem Ende mit der Roboterbasis und mit dem anderen Ende mit dem Trägerelement verbunden. Jedes Betätigungselement wird über einen ihm zugeordneten und an der Roboterbasis angeordneten Antrieb bewegt. Eine Bewegung der Betätigungseinheiten führt zu einer Bewegung des Trägerelements. An dem Trägerelement kann beispielsweise ein Greifer zum Aufnehmen eines Gegenstands oder ein Werkzeug zum Bearbeiten eines Gegenstands oder ein Maschinenelement, wie beispielsweise ein Lager oder ein Getriebe angeordnet sein. Das Trägerelement ist hierzu mit einer Aufnahme für einen Greifer, ein Maschinenelement, wie beispielsweise ein Lager oder ein Getriebe angeordnet sein. Das Trägerelement ist hierzu mit einer Aufnahme für einen Greifer, ein Werkzeug oder ein Maschinenelement ausgestattet. Durch die aufeinander abgestimmte Bewegung der angetriebenen Betätigungseinheiten kann der an dem Trägerelement angeordnete Greifer, das Werkzeug oder das Maschinenelement gezielt in mehreren Dimensionen im Raum bewegt werden. Die Betätigungsarme bewirken eine räumliche Parallelogrammführung des Trägerelements. Die daraus resultierende parallele Kinematik ermöglicht eine schnelle und präzise Bewegung des Trägerelements und des daran angeordneten Greifers, Werkzeugs oder Maschinenelements. Diese Bewegung ist eine translatorische Bewegung des Trägerelements. Ist der Industrieroboter mit drei Betätigungseinheiten ausgestattet, handelt es sich um eine translatorische Bewegung in drei Raumrichtungen. Die Bewegung hat drei Freiheitsgrade und kann in einem Koordinatensystem mit x-, y- und z-Achse beschrieben werden. Ist der Industrieroboter mit zwei Betätigungseinheiten ausgestattet, handelt es um eine translatorische Bewegung in zwei Raumrichtungen. In diesem Fall hat die Bewegung zwei Freiheitsgrade und kann in einem Koordinatensystem mit x- und z-Achse beschrieben werden. Zusätzlich zu dieser translatorischen Bewegung des Trägerelements kann durch einen weiteren Antrieb an der Roboterbasis ein Drehmoment erzeugt und auf einen an dem Trägerelement angeordneten Greifer, ein Werkzeug oder ein Maschinenelement übertragen werden. Hierbei handelt es sich um eine Rotationsbewegung und damit um einen weiteren Freiheitsgrad. Diese Bewegung dient nicht der Positionierung des Greifers, Werkzeugs oder Maschinenelements im Raum sondern dem Bewegung des Greifers, Werkzeugs oder Maschinenelements selbst, beispielsweise dem Öffnen und Schließen des Greifers oder dem Drehen des Werkzeugs oder Maschinenelements. Ist der Industrieroboter mit drei Steuerarmen ausgestattet, wird eine das Drehmoment von dem Antrieb auf einen Greifer, ein Werkzeug oder Maschinenelement an dem Trägerelement übertragende Drehachse als vierte Achse bezeichnet.

Zu derartigen Robotern zählen beispielsweise Deltaroboter. Diese sind mit mindestens zwei Steuerarmen als Betätigungseinheiten ausgestattet. Die Betätigungs- oder Steuerarme weisen einen oberen und einen unteren Armabschnitt auf, welche beweglich miteinander verbunden sind. Jeder der oberen Armabschnitte wird durch einen Betätigungsarm-Antrieb, beispielsweise eine Motor-Getriebe-Einheit, angetrieben. Die Antriebe sind an der Roboterbasis angeordnet. Die Bewegung der oberen Armabschnitte wird über die unteren Armabschnitte auf das Trägerelement übertragen. Jeder untere Armabschnitt weist zwei parallele, in Längsrichtung des Armabschnitts verlaufende Stangen oder Streben auf, die an ihrem einen Ende beweglich mit dem zugehörigen oberen Armabschnitt und mit ihrem anderen Ende beweglich mit dem Trägerelement verbunden sind.

Neben Deltarobotern zählen auch Seilroboter zu Industrierobotern mit Parallelkinematik. Seilroboter sind mit Seilen als Betätigungseinheiten ausgestattet. Mit seinem einen Ende ist jedes Seil mit einem Antrieb verbunden. Die Antriebe sind als Rotations- oder Linearantriebe ausgebildet, welche die freie Länge der Seile durch Auf- und Abwickeln auf eine mit einem Seilende verbundene Welle oder durch Vor- und Zurückschieben einer mit einem Seilende verbundenen Schubstange vorgeben. An ihrem dem Antrieb abgewandten Ende sind die Seile mit einem Trägerelement für einen Greifer oder ein Werkzeug verbunden. Dabei ist dafür Sorge zu tragen, dass die Seile gespannt sind. Durch die aufeinander abgestimmte Bewegung der Antriebe kann der an dem Trägerelement angeordnete Greifer oder das Werkzeug gezielt in mehreren Dimensionen bewegt werden.

Ein an dem Trägerelement angeordneter Greifer, ein Werkzeug oder ein Maschinenelement kann zusätzlich über einen pneumatischen, hydraulischen oder elektrischen Antrieb betätigt werden. Darüber hinaus können an dem Trägerelement Sensoren zur Überwachung und Steuerung des Greifers, Werkzeugs oder Maschinenelements angeordnet sein. Hierzu sind hydraulische, pneumatischen, elektrische oder optische Versorgungsleitungen von der Roboterbasis bis zum Trägerelement geführt. Die Versorgungsleitungen dienen dem Transport von Druckluft, Druckflüssigkeit, elektrischem Strom oder Licht. Licht kann beispielsweise für einen an dem Greifer oder dem Werkzeug angeordneten Sensor notwendig sein. Die Versorgungsleitungen verbinden dabei frei und ohne Führung die Roboterbasis mit dem Trägerelement oder sie sind an den Betätigungseinheiten oder an der Übertragungseinrichtung entlang geführt.

Ein derartiger Industrieroboter mit Betätigungseinheiten in Form von Steuerarmen ist beispielsweise aus der EP 250 470 A1 bekannt.

Bekannte Industrieroboter mit Parallelkinematik weisen den Nachteil auf, dass für die Bewegung eines an dem Trägerelement angeordneten Greifers, Werkzeugs oder Maschinenelement nur ein Rotations-Freiheitsgrad zur Verfügung steht. Daher können mit dem Greifer, dem Werkzeug oder dem Maschinenelement nur eindimensionale Rotationsbewegungen ausgeführt werden.

Aus US 2012/118097 A1 ist ein Industrieroboter mit Parallelkinematik mit einer Roboterbasis und einem Trägerelement bekannt. An der Roboterbasis sind mehrere Antriebseinheiten angeordnet, die ieweils eine längliche Betätigungseinheit antreiben. Jede Betätigungseinheit ist beweglich mit dem Trägerelement verbunden. Zusätzlich dazu ist ein länglicher Hohlkörper an der Roboterbasis und an dem Trägerelement beweglich angeordnet und bildet einen durchgängigen Hohlraum von der Roboterbasis bis zum Trägerelement. In dem Hohlkörper sind Versorgungsleitungen von der Roboterbasis zum Trägerlement geführt. Der Hohlkörper ist mit einer Antriebseinheit verbunden und überträgt ein Drehmoment oder eine Kraft der Antriebseinheit auf das Trägerelement oder auf ein an dem Trägerelement angeordnetes Werkzeug. Der Hohlkörper dient damit als zusätzliche vierte Achse. Weitere Achsen sind nicht offenbart.

Die US 2010/206120 A1 offenbart einen Roboter mit Parallelkinematik mit einer Roboterbasis, einem beweglichen Trägerelement und drei angetriebenen Roboterarmen. Zusätzlich dazu ist der Roboter mit drei stabförmigen Übertragungselementen ausgestattet, die ieweils durch einen Servomotor zur Rotation angetrieben sind. Jedes des stabförmigen Übertragungselemente überträgt dabei ein Drehmoment von einem an der Roboterbasis angeordneten Servomotor auf einen am Trägerelement drehbar angeordneten Abschnitt. Die drei stabförmigen Elemente sind dabei nebeneinander angeordnet.

Der Erfindung liegt die Aufgabe zugrunde, einen Industrieroboter mit Parallelkinematik zur Verfügung zu stellen, der eine Bewegung eines Greifers, Werkzeugs oder Maschinenelements an dem Trägerelement ermöglicht, wobei diese Bewegung mehrere Rotations-Freiheitsgrade aufweist und dabei der Industrieroboter eine kompaktere Bauweise ermöglicht.

Diese Aufgabe wird durch einen Industrieroboter mit den Merkmalen des Anspruchs 1 gelöst. Er ist zusätzlich zu den Betätigungseinheiten mit zwei Drehachsen und zwei zugehörigen Drehachsen-Antrieben ausgestattet. Die erste Drehachse ist als länglicher Hohlkörper mit einem in Längsrichtung verlaufenden, durchgängigen Hohlraum ausgebildet. Ferner ist die erste Drehachse über ein innen hohl ausgebildetes erstes Gelenk mit mehreren Freiheitsgraden mittelbar oder unmittelbar mit der Roboterbasis beweglich verbunden. Darüber hinaus ist die erste Drehachse über ein innen hohl ausgebildetes zweites Gelenk mit mehreren Freiheitsgraden mittelbar oder unmittelbar mit dem Trägerelement verbunden. Die Hohlräume der beiden hohlen Gelenke schließen sich dabei an den Hohlraum des länglichen Hohlkörpers an und bilden einen durchgängigen Kanal von der Roboterbasis bis zu dem Trägerelement. In diesem Kanal ist zumindest abschnittsweise eine zweite Drehachse angeordnet. Die zweite Drehachse erstreckt sich durch diesen Kanal hindurch von der Roboterbasis bis zu dem Trägerelement. Ihr Durchmesser ist kleiner als der Durchmesser der ersten Drehachse. Sie kann mit ihren Enden über den Kanal überstehen. An der Roboterbasis sind ein erster Drehachsen-Antrieb und ein zweiter Drehachsen-Antrieb angeordnet. Der erste Drehachsen-Antrieb ist an die erste Drehachse gekoppelt und überträgt ein erstes Drehmoment des ersten Drehachsen-Antriebs auf die erste Drehachse, welche wiederum dieses erste Drehmoment auf einen Greifer, ein Werkzeug oder ein Maschinenelement an dem Trägerelement überträgt. Der zweite Drehachsen-Antrieb ist an die zweite Drehachse gekoppelt und überträgt ein zweites Drehmoment des zweiten Drehachsen-Antriebs auf die zweite Drehachse, welche wiederum dieses zweite Drehmoment auf einen Greifer, ein Werkzeug oder ein Maschinenelement an dem Trägerelement überträgt. Darüber hinaus können in der ersten oder zweiten Drehachse weitere Drehachsen angeordnet sein, die an entsprechende weitere Drehachsen-Antriebe an der Roboterbasis gekoppelt sind. Auf diese Weise können zwei, drei oder mehr Drehmomente auf einen Greifer, ein Werkzeug oder ein Maschinenelement an dem Trägerelement übertragen werden. Somit können Bewegungen mit mehreren rotatorischen Freiheitsgraden realisiert werden. Die Drehachsen-Antriebe sind alle ortsfest an der Roboterbasis angeordnet. Sie beeinträchtigen und erschweren damit die Bewegung der Betätigungseinheiten und des Trägerelements nicht.

Die Drehachsen können aus einem leichten und stabilen Material wie beispielsweise Faser-verstärktem Kunststoff bestehen.

Vorteilhafterweise sind die Drehachsen längenvariabel. Bei der Bewegung der Betätigungseinheiten ändert sich der Abstand zwischen der Roboterbasis und dem Trägerelement. Sind die Drehachsen in ihrer Länge variabel, so können sie ihre Länge an die unterschiedlichen Abstände zwischen Roboterbasis und Trägerelement anpassen. Alternativ dazu können die Drehachsen eine feste Länge aufweisen und über die Roboterbasis nach oben überstehen. Dieser nach oben überstehende Abschnitt variiert in seiner Länge je nach Abstand zwischen der Roboterbasis und dem Trägerelement.

Die Drehachsen verlaufen vorteilhafterweise neben den Betätigungseinheiten, so dass sich die Betätigungseinheiten und die Drehachsen in ihrer Bewegung nicht gegenseitig beeinträchtigen. Vorteilhafterweise sind die Drehachsen in einem Zwischenraum zwischen den Betätigungseinheiten angeordnet.

Die zweite Drehachse ist als Gelenkwelle ausgebildet. Sie weist ein erstes Wellengelenk und ein zweites Wellengelenk auf. Über das erste Wellengelenk kann die Gelenkwelle mit dem zweiten Drehachsen-Antrieb verbunden werden. Über das zweite Wellengelenk kann die zweite Drehachse mit einem an dem Trägerelement angeordneten Greifer, Werkzeug oder Maschinenelement verbunden werden.

Die zweite Drehachse erstreckt sich durch die erste Drehachse mit den ihr zugehörigen hohlen Gelenken hindurch. Die beiden Drehachsen übertragen unabhängig voneinander Drehmomente auf einen an dem Trägerelement angeordneten Greifer, Werkzeuge oder Maschinenelement.

An den durchgängigen Hohlraum der ersten Drehachse schließt sich der Hohlraum der beiden ihr zugeordneten Gelenke an. Jedes der beiden innen hohlen Gelenke weist mehrere Gelenkteile auf, die relativ zueinander beweglich sind. Diese sorgen für mehrere Freiheitsgrade des Gelenks, so dass die über das Gelenk mit dem Trägerelement verbundene erste Drehachse der Bewegung des Trägerelements folgen kann. Das Trägerelement wird über die Betätigungseinheiten mehrdimensional im Raum bewegt. Das Gelenk muss daher mindestens eine Bewegung in zwei Dimensionen gestatten. Eine Bewegung hinsichtlich einer dritten Dimension wird beispielsweise durch eine in Längsrichtung verschiebbare Anordnung des länglichen Hohlkörpers an der Roboterbasis oder durch eine längenvariable Ausgestaltung des länglichen Hohlkörpers ermöglicht. Die Gelenkteile weisen bevorzugt entweder einen durchgängigen Hohlraum auf oder sind um einen Hohlraum herum angeordnet. Sind die Gelenkteile ineinander angeordnet wie beispielsweise bei einem homokinetischen Gelenk oder Gleichlaufgelenk, so weist das innerste Gelenkteil einen Hohlraum auf, durch den die zweite Drehachse hindurchgeführt ist. Die übrigen Gelenkteile sind um das innerste Gelenkteil herum angeordnet und engen den Hohlraum nicht ein. Sind die Gelenkteile nacheinander angeordnet, wie beispielsweise bei einem Kreuzgelenk oder Kardangelenk mit einem zentralen Gelenkteil und mit daran in verschiedene Richtungen ansetzenden gabelartigen Gelenkteilen, so schließen sich die Hohlräume der einzelnen Gelenkteile aneinander an. Gelenkteile, welche das Gelenk mit der ersten Drehachse und mit dem Trägerelement oder einem an dem Trägerelement angeordneten Greifer, Werkzeug oder Maschinenelement verbinden, sind ebenfalls hohl ausgebildet oder um einen Hohlraum herum angeordnet, so dass ein allen Gelenkteilen gemeinsamer durchgängiger Hohlraum entsteht oder eine Abfolge hintereinander angeordneter Hohlräume, die wiederum in der Summe einen gemeinsamen durchgängigen Hohlraum aller Gelenkteile für die zweite Drehachse ergeben. Dieser durchgängige Hohlraum verläuft in der Ausgangsstellung des Gelenks, in welchem das Gelenk nicht ausgelenkt ist, in axialer Richtung. In dieser Ausgangsstellung kann das Gelenk zwei parallel ausgerichtete, gedachte Wellen verbinden. Erst durch die Auslenkung des Gelenks werden die beiden Wellen abgewinkelt zueinander ausgerichtet. Bei dem mit der ersten Drehachse verbundenen Gelenk entspricht die axiale Richtung des Gelenks der Längsrichtung der ersten Drehachse und des Hohlraums der ersten Drehachse. In dieser Ausgangsstellung ist die erste Drehachse vertikal ausgerichtet.

Nach einer vorteilhaften Ausgestaltung der Erfindung ist die zweite Drehachse eine Antriebswelle mit mindestens zwei Wellengelenken mit mehreren Freiheitsgraden und einer längenvariablen Zwischenwelle.

Nach einer weiteren vorteilhaften Ausgestaltung der Erfindung ist die erste Drehachse längenvariabel. Bei einer Bewegung des Trägerelements verändert sich der Abstand zwischen der Roboterbasis und dem Trägerelement. Die zwischen der Roboterbasis und dem Trägerelement angeordnete erste Drehachse muss daher ihre Länge entsprechend dem Abstand ändern.

Nach einer weiteren vorteilhaften Ausgestaltung der Erfindung weist die erste Drehachse als Komponenten mindestens zwei teleskopartig ineinander verschiebbare Rohre auf. Diese sind ineinander verdrehsicher gelagert. Hierzu können die Rohre einen kreisrunden Querschnitt aufweisen. Dabei ist ein inneres Rohr mit radial nach außen abstehenden Wülsten ausgestattet, während das äußere Rohr Nuten aufweist, die an die Wülste angepasst sind. Wülste und Nuten verlaufen in Längsrichtung der Rohre. Darüber hinaus können die Rohre auch einen Querschnitt aufweisen, der von einer kreisrunden Form abweicht, beispielsweise ein ovaler oder ein eckiger Querschnitt. Der aus mindestens zwei teleskopartig ineinander angeordneten Rohren bestehende längliche Hohlkörper hat den Vorteil, dass er in seiner Länge variabel ist und sich dem variablen Abstand zwischen der Roboterbasis und dem Trägerelement anpasst. Ferner können auch mit Rohren mit geringem Gewicht große Drehmomente übertragen werden. Es besteht jedoch auch die Möglichkeit, flexible Antriebswellen als längliche Hohlkörper einzusetzen. Diese sind ebenfalls als Hohlkörper ausgebildet und können somit die zweite Drehachse aufnehmen. Ferner kann die erste Drehachse lediglich ein biegefestes Rohr aufweisen. Um dem variablen Abstand zwischen der Roboterbasis und dem Trägerelement Rechnung zu tragen, kann das Rohr an der Roboterbasis verschiebbar gelagert sein.

Nach einer weiteren vorteilhaften Ausgestaltung der Erfindung sind die hohlen Gelenke der ersten Drehachse und/ oder die Wellengelenke der zweiten Drehachse Kardangelenke. Sie weisen ein mit gekreuzten Achsen oder Achsstummelpaaren ausgestattetes zentrales rohr- oder ringförmiges Gelenkteil auf. Ein Kardangelenk wird aufgrund der sich kreuzenden Achsen auch als Kreuzgelenk bezeichnet. Bei den hohl ausgebildeten Gelenken weisen die Gelenkteile einen durchgängigen Hohlraum auf. Hierzu können die Gelenkteile beispielsweise die Form von Ringen, Rohren oder Rohrabschnitten aufweisen.

Nach einer weiteren vorteilhaften Ausgestaltung der Erfindung sind die Gelenke Gleichlaufgelenke. Dabei weist ein innerer Gelenkteil einen durchgängigen Hohlraum auf, der das Gelenkteil vollständig durchdringt. Die übrigen Gelenkteile sind um das innere Gelenkteil herum angeordnet. Gleichlaufgelenke werden auch als homokinetische Gelenke bezeichnet.

Nach einer weiteren vorteilhaften Ausgestaltung der Erfindung ist das Trägerelement mit einem drehbar in dem Trägerelement gelagerten Ring oder einer Hohlwelle ausgestattet. Der Ring oder die Hohlwelle sind an ihrem der ersten Drehachse zugewandten Ende mit dem hohlen Gelenk und an ihrem der ersten Drehachse abgewandten Ende mit einem Greifer, Werkzeug oder Maschinenelement verbunden.

Nach einer weiteren vorteilhaften Ausgestaltung der Erfindung ist die erste Drehachse zusammen mit dem oder den Gelenken an ihren Enden ebenfalls als Gelenkwelle mit Längenausgleich zur Übertragung von Drehmomenten von einem an der Roboterbasis angeordneten Rotationsantrieb als erster Drehachsen-Antrieb auf einen an dem Trägerelement angeordneten Greifer, Werkzeug oder Maschinenelement ausgebildet.

Nach einer weiteren vorteilhaften Ausgestaltung der Erfindung ist die erste Drehachse biegesteif. Auf diese Weise findet keine Verformung der ersten Drehachse statt. Ferner können durch die erste Drehachse durch einen zusätzlichen Antrieb Kräfte auf das Trägerelement oder einen an dem Trägerelement angeordneten Greifer oder ein Werkzeug übertragen werden.

Nach einer weiteren vorteilhaften Ausgestaltung der Erfindung ist die zweite Drehachse längenvariabel. Bei einer Bewegung des Trägerelements verändert sich der Abstand zwischen der Roboterbasis und dem Trägerelement. Ist die zweite Drehachse längenvariabel, so kann sie ihre Länge an den Abstand zwischen der Roboterbasis und dem Trägerelement anpassen.

Nach einer weiteren vorteilhaften Ausgestaltung der Erfindung weist die zweite Drehachse mindestens zwei teleskopartig ineinander verschiebbare Rohre auf. Bevorzugt sind die beiden Rohre verdrehsicher ineinander anordnet. Die zweite Drehachse kann diesbezüglich entsprechend der ersten Drehachse ausgebildet sein.

Nach einer weiteren vorteilhaften Ausgestaltung der Erfindung ist die zweite Drehachse als länglicher Hohlkörper mit in axialer Richtung verlaufendem, durchgängigem Hohlraum ausgebildet. Dieser Hohlraum bildet zusammen mit an der zweiten Drehachse angeordneten hohlen Wellengelenken einen durchgängigen Kanal von der Roboterbasis bis zum Trägerelement.

Nach einer weiteren vorteilhaften Ausgestaltung der Erfindung ist in dem durchgängigen Kanal der zweiten Drehachse zumindest teilweise eine dritte Drehachse angeordnet. An der Roboterbasis ist ein dritter Drehachsen-Antrieb angeordnet, welcher ein drittes Drehmoment erzeugt. Der dritte Drehachsen-Antrieb ist an die dritte Drehachse gekoppelt, welche das dritte Drehmoment auf einen Greifer, ein Werkzeug oder ein Maschinenelement an dem Trägerelement überträgt. Auf dieser Weise können drei Drehmomente auf einen Greifer, ein Werkzeug oder ein Maschinenelement an dem Trägerelement übertragen werden. Die dritte Drehachse kann ihrerseits wiederum einen durchgängigen Hohlraum aufweisen, in dem eine vierte Drehachse angeordnet ist. Dabei ist die vierte Drehachse ihrerseits an einen vierten Drehachsen-Antrieb gekoppelt. Entsprechend können weitere Drehachsen und Drehachsen-Antriebe vorgesehen sein. Jede Drehachse überträgt unabhängig von den anderen Drehachsen ein Drehmoment des ihr zugeordneten Drehachsen-Antriebs auf einen Greifer, ein Werkzeug oder ein Maschinenelement. Entsprechend viele Rotations-Freiheitsgrade können realisiert werden.

Nach einer weiteren vorteilhaften Ausgestaltung der Erfindung sind die Drehachsen koaxial zueinander angeordnet.

Nach einer weiteren vorteilhaften Ausgestaltung der Erfindung sind mehrere zweite Drehachsen zumindest abschnittsweise parallel nebeneinander in der ersten Drehachse angeordnet. Jeder zweiten Drehachse ist ein separater Drehachsen-Antrieb an der Roboterbasis zugeordnet. Die zweiten Drehachsen können eine unterschiedliche Länge aufweisen. Insbesondere können sie unterschiedlich weit über die Roboterbasis überstehen.

Nach einer weiteren vorteilhaften Ausgestaltung der Erfindung ist in dem durchgängigen Kanal der ersten Drehachse mindestens eine pneumatischen und/ oder hydraulische und/ oder elektrische und/ oder optische Versorgungsleitung für einen an dem Trägerelement angeordneten Greifer, ein an dem Trägerelement angeordnetes Werkzeug oder ein an dem Trägerelement angeordneten Maschinenelement angeordnet. Dadurch können in der ersten Drehachse Versorgungsleitungen von der Roboterbasis bis zu dem Trägerelement geführt sein. Dadurch sind sie zum einem vor Verunreinigung und Verschmutzung und zum anderen vor einer Beschädigung geschützt. Ist die zweite Drehachse ebenfalls hohl ausgebildet, so können derartige Versorgungsleitungen auch in der zweiten Drehachse angeordnet sein.

Die Gelenkwellen können nicht nur bei Industrierobotern mit Parallelkinematik sondern auch bei anderen Industrierobotern eingesetzt werden. Dies gilt auch für mehrere ineinander angeordnete Gelenkwellen.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung ist ein Ausführungsbeispiel der Erfindung dargestellt und im folgenden näher beschrieben. Es zeigen:
- Figur 1: erstes Ausführungsbeispiel eines Industrieroboters mit Parallelkinematik in perspektivischer Ansicht,
- Figur 2: Industrieroboter gemäß Figur 1 in einer Ansicht von der Seite,
- Figur 3: Industrieroboter gemäß Figur 1 in perspektivischer Ansicht von oben,
- Figur 4: Industrieroboter gemäß Figur 1 in einer Ansicht von oben,
- Figur 5: Industrieroboter gemäß Figur 1 in einer Ansicht von unten,
- Figur 6: Ausschnitt aus einem Vertikalschnitt durch die Roboterbasis des Industrieroboters gemäß Figur 1,
- Figur 7: Vertikalschnitt durch das Trägerelement des Industrieroboters gemäß Figur 1,
- Figur 8: perspektivische Ansicht von unten der Roboterbasis des Industrieroboters gemäß Figur 1,
- Figur 9: perspektivische Ansicht von unten des Trägerelements des Industrieroboters gemäß Figur 1,
- Figur 10: perspektivische Ansicht von oben des Trägerelements des Industrieroboters gemäß Figur 1,
- Figur 11: zweites Ausführungsbeispiel eines Industrieroboters mit Parallelkinematik in perspektivischer Ansicht,
- Figur 12: Industrieroboter gemäß Figur 11 in Vertikalschnitt.

### Beschreibung des Ausführungsbeispiels

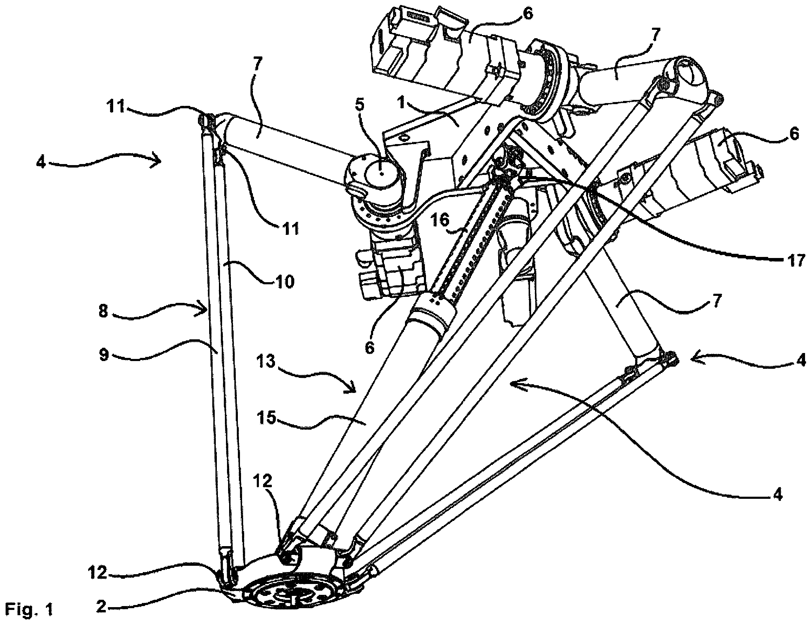

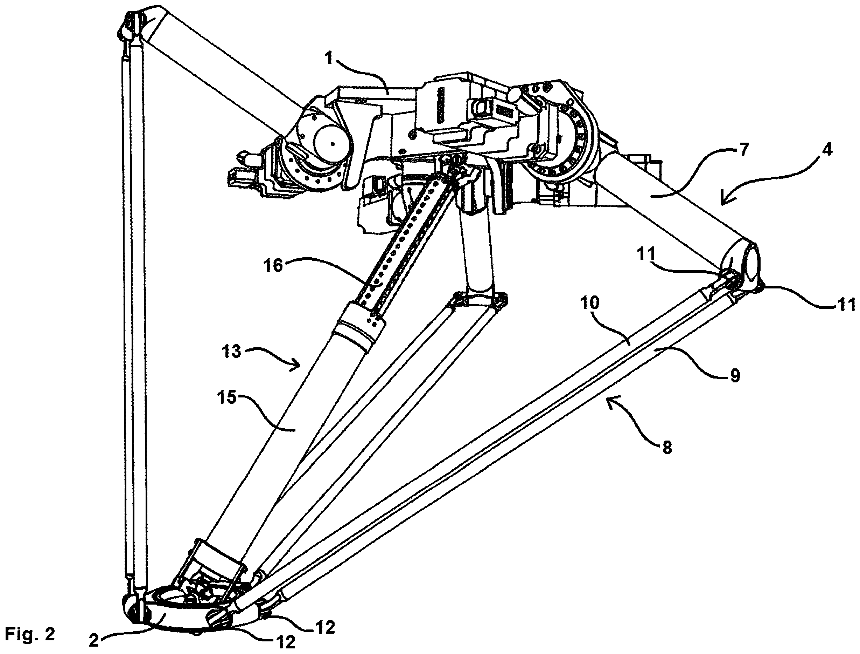

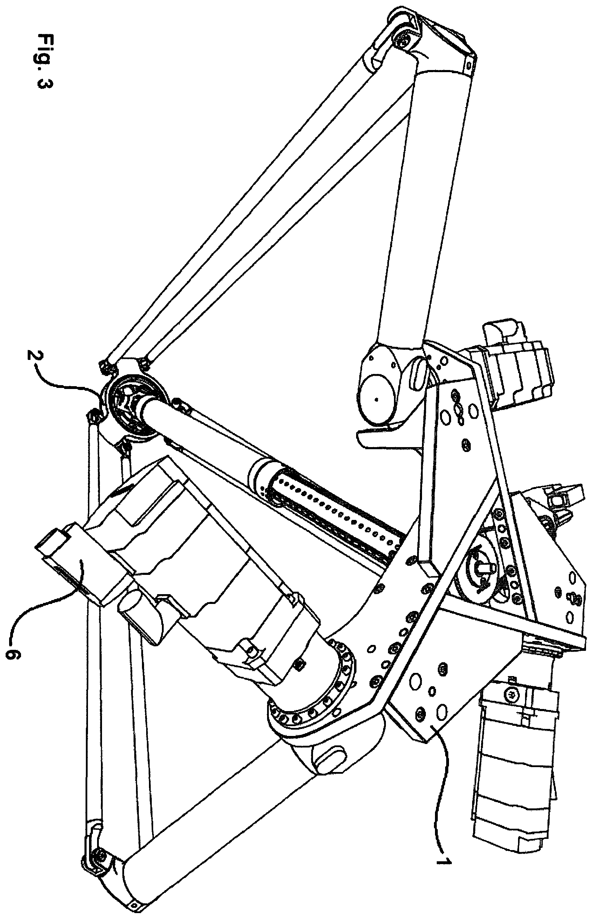

In den Figuren 1 bis 10 ist ein erstes Ausführungsbeispiel eines Industrieroboters mit Parallelkinematik nach dem Delta-Prinzip mit einer Roboterbasis 1, einem Trägerelement 2, an welchem ein Greifer, ein Werkzeug oder ein Maschinenelement angeordnet werden kann, und drei als Steuerarme ausgebildete Betätigungseinheiten 4 dargestellt. Der Greifer, das Werkzeug oder das Maschinenelement sind in der Zeichnung nicht gezeigt. Jeder der drei Betätigungseinheiten ist über eine Antriebswelle 5 mit einem als Motor ausgebildeten Betätigungseinheit-Antrieb 6 verbunden. Alle drei Betätigungseinheiten 4 sind gleich aufgebaut. Die Betätigungseinheiten 4 weisen einen oberen Armabschnitt 7 und einem unteren Armabschnitt 8 auf. Dabei zeichnet sich der obere Armabschnitt 7 durch eine hohe Stabilität und ein geringes Gewicht aus. Der untere Armabschnitt 8 weist zwei parallel verlaufende Stangen 9 und 10 auf. Die beiden Stangen 9 und 10 des unteren Armabschnitts 8 einer Betätigungseinheit 4 sind über Gelenke 11 an ihrem oberen Ende mit dem oberen Armabschnitt 7 der Betätigungseinheit 4 und über Gelenke 12 mit dem Trägerelement 2 verbunden.

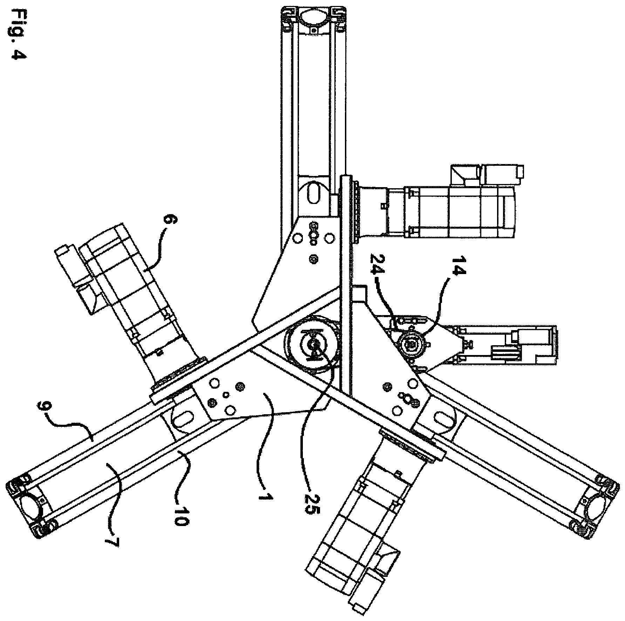

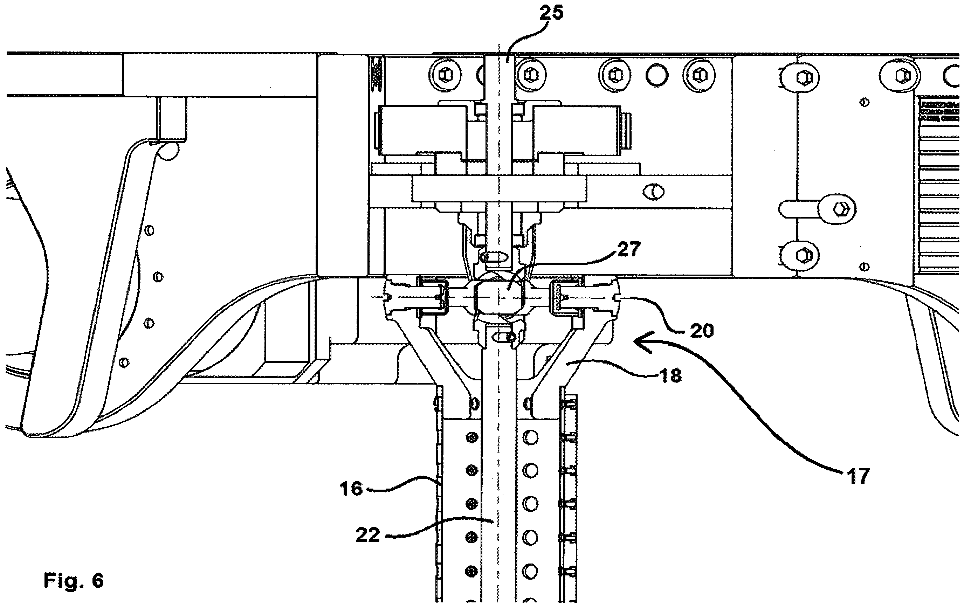

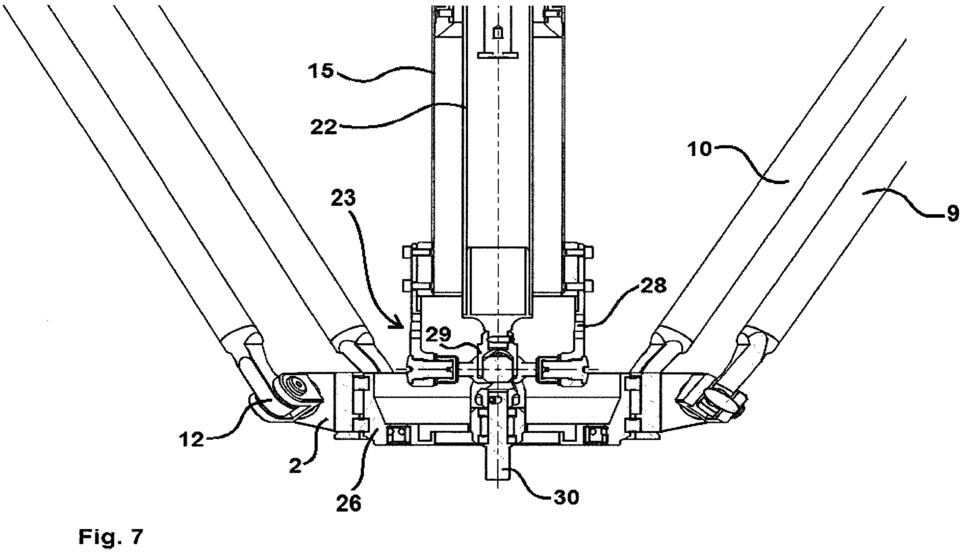

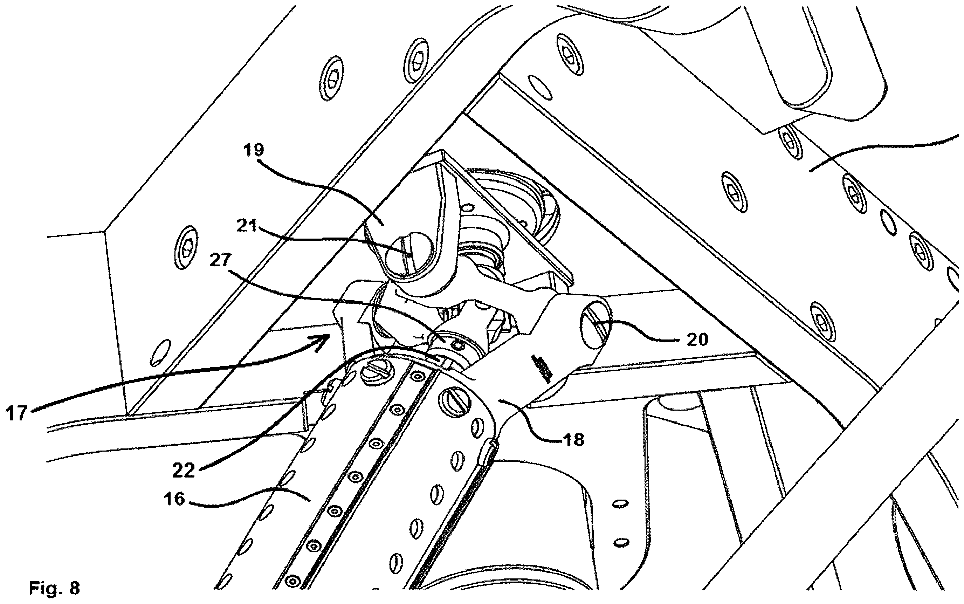

Der Industrieroboter ist ferner mit einer als Hohlkörper ausgebildeten ersten Drehachse 13 ausgestattet. Sie dient dazu, ein Drehmoment eines an der Roboterbasis 1 angeordneten, in Figur 4 erkennbaren ersten Drehachsen-Antriebs 14 auf einen in der Zeichnung nicht dargestellten Greifer oder ein nicht dargestelltes Werkzeug oder Maschinenelement an dem Trägerelement zu übertragen. Die erste Drehachse 13 weist zwei ineinander verschiebbare, teleskopartig angeordnete Rohre 15 und 16 auf. Durch die verschiebbare Lagerung können Abstandsänderungen zwischen der Roboterbasis 1 und dem Trägerelement 2 bei einer Bewegung der Betätigungseinheiten 4 ausgeglichen werden. Das obere Rohr 16 ist über ein erstes Gelenk 17 beweglich mit der Roboterbasis 1 verbunden. Das erste Gelenk ist besonders gut in Figur 6 und in Figur 8 erkennbar. Das erste Gelenk 17 weist zwei Gelenkteile 18 und 19 auf, welche um senkrecht zueinander verlaufende Achsen 20 und 21 drehbar angeordnet sind. Es handelt sich hierbei um ein Kardangelenk oder Kreuzgelenk. Die beiden Gelenkteile 18 und 19 weisen einen durchgängigen Hohlraum auf, durch den sich eine Gelenkwelle 22 erstreckt. Diese ist in den Figuren 6 und 7 erkennbar. Der durchgängige Hohlraum kann auch als Kanal bezeichnet werden.

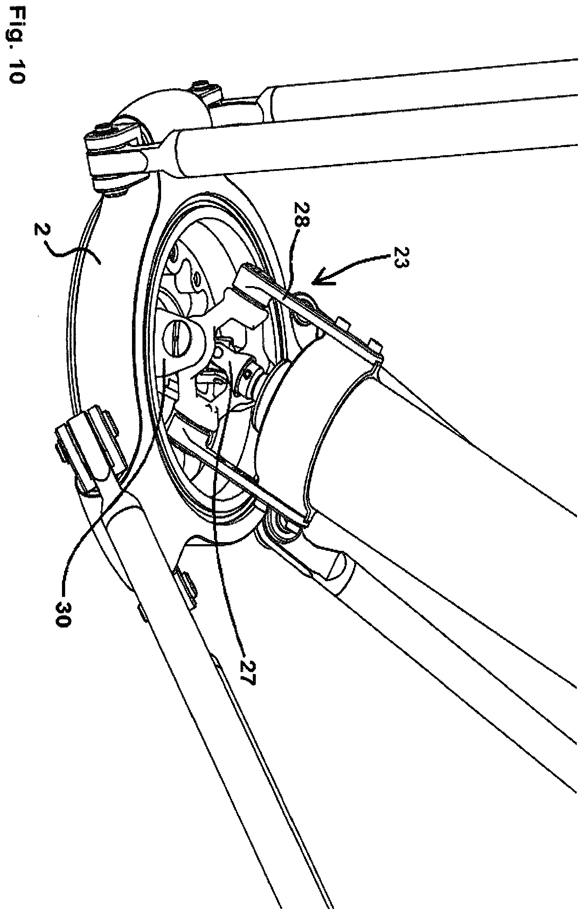

Über ein entsprechendes zweites Gelenk 23 ist das untere Rohr 15 der ersten Drehachse 13 beweglich mit dem Trägerelement 2 verbunden. Dies ist in den Figuren 7 und 10 dargestellt. Durch die beiden Gelenke 17, 23 kann die längenverstellbare erste Drehachse 13 einer Auslenkung des Trägerelements 2 relativ zur Roboterbasis 1 folgen.

Figur 4 zeigt den Industrieroboter in einer Ansicht von oben. In dieser Darstellung ist der erste Drehachsen-Antrieb 14 erkennbar, der an der Roboterbasis 1 ortsfest angeordnet ist und über einen Zahnriemen 24 die erste Drehachse 13 zur Rotation antreibt. Ferner ist in Figur 4 ein Wellenstummel 25 erkennbar, der mit der Gelenkwelle 22 in Verbindung steht. An diesen Wellenstummel wird ein in der Zeichnung nicht dargestellter zweiter Drehachsen-Antrieb gekoppelt, der die zweite Drehachse 22 zur Rotation antreibt. Dieser zweite Drehachsen-Antrieb ist ebenfalls ortsfest an der Roboterbasis angeordnet. In der Darstellung gemäß Figur 4 sind darüber hinaus die oberen Armabschnitte 7 der Betätigungseinheiten 4, die Stangen 9 und 10 der unteren Armabschnitte 8 und der Betätigungseinheit-Antrieb 6 erkennbar.

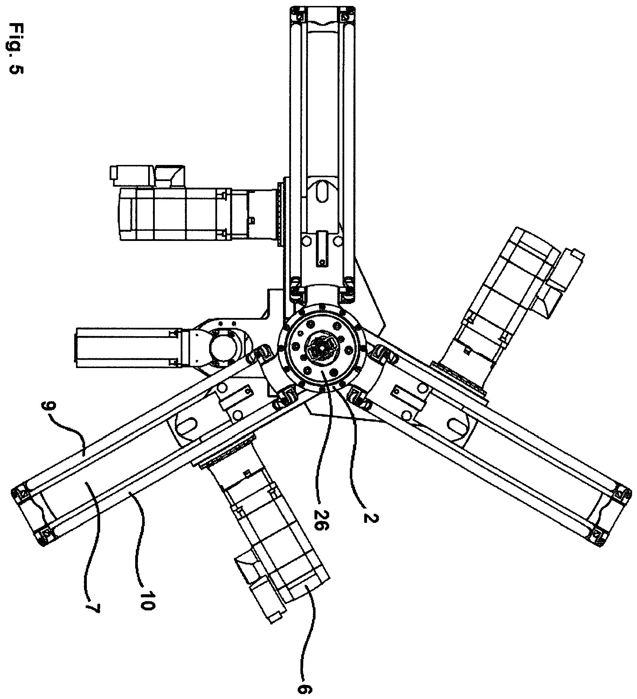

Figur 5 zeigt den Industrieroboter in einer Ansicht von unten. In dieser Darstellung ist das Trägerelement 2 erkennbar sowie ein in dem Trägerelement 2 drehbar angeordneter Ring 26. Der Ring ist über das Gelenk 23 mit der ersten Drehachse 13 verbunden. Das Drehmoment des ersten Drehachsen-Antriebs 14 wird über die hohlen Gelenke 17, 23 und die erste Drehachse 13 auf den Ring 26 übertragen.

Figur 6 zeigt einen Ausschnitt aus einem Vertikalschnitt durch die Roboterbasis 1. In dieser Darstellung sind ein oberer Abschnitt des Rohrs 16 der ersten Drehachse, eine Gelenkgabel 18 des ersten Gelenks mit der Achse 20, die Gelenkwelle 22 mit einem ersten Wellengelenk 27 und ein mit dem ersten Wellengelenk verbundener Wellenstummel 25 erkennbar.

Figur 7 zeigt einen Vertikalschnitt durch das Trägerelement 2. In dieser Darstellung sind die Stangen 9, 10 der unteren Armabschnitte der Betätigungseinheiten mit ihren Gelenken 12, das Rohr 15, eine Gelenkgabel 28 des hohlen Gelenks 23, der an das Gelenk 23 gekoppelte Ring 26, die Gelenkwelle 22, ein zweites Wellengelenk 29 der Gelenkwelle 22 und ein zweiter Wellenstummel 30 erkennbar. Der zweite Wellenstummel 30 ist an das zweite Wellengelenk 29 gekoppelt. An ihn kann ein Greifer, ein Werkzeug oder ein Maschinenelement angebunden werden. Diese sind in der Zeichnung nicht dargestellt.

Figur 8 zeigt in einer perspektivischen Ansicht einen oberen Teil des Rohrs 16 der ersten Drehachse mit den beiden Gelenkgabeln 18, 19 des ersten hohlen Gelenks und den zugehörigen senkrecht stehenden Achsen 20 und 21, die zweite Drehachse 22 und das an der zweiten Drehachse 22 angeordneten erste Wellengelenk 27.

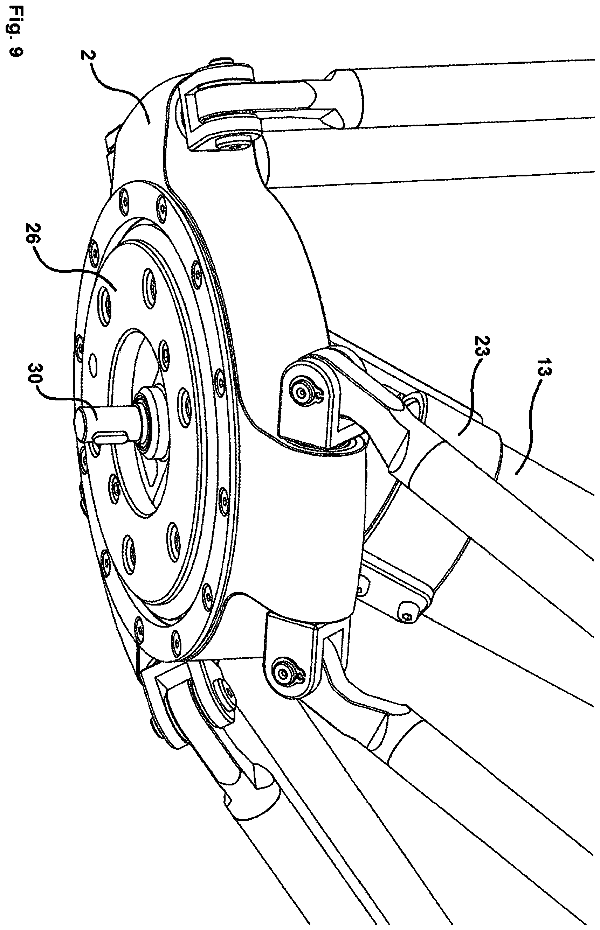

Figur 9 zeigt das Trägerelement 2 in einer perspektivischen Ansicht von unten. In dieser Darstellung sind der Ring 26, welcher über das zweite hohle Gelenk 23 an die erste Drehachse 13 gekoppelt ist, und der zweite Wellenstummel 30, der über das zweite Wellengelenk an die Gelenkwelle gekoppelt ist, erkennbar.

Figur 10 zeigt das Trägerelement 2 in einer perspektivischen Ansicht von oben. In dieser Darstellung sind die Gelenkgabeln 28, 31 des zweiten hohlen Gelenks 23 und das zweite Wellengelenk 27 der zweiten Drehachse erkennbar.

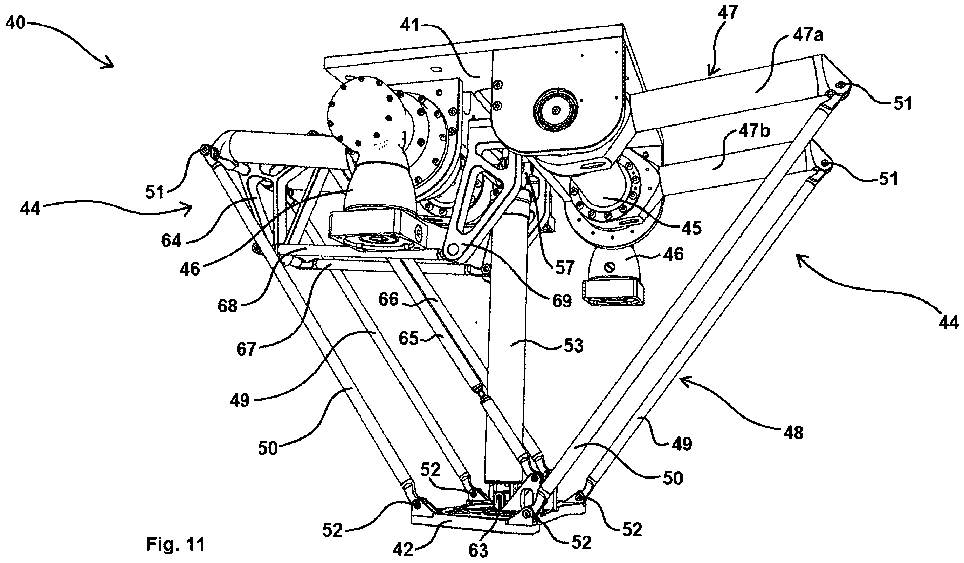

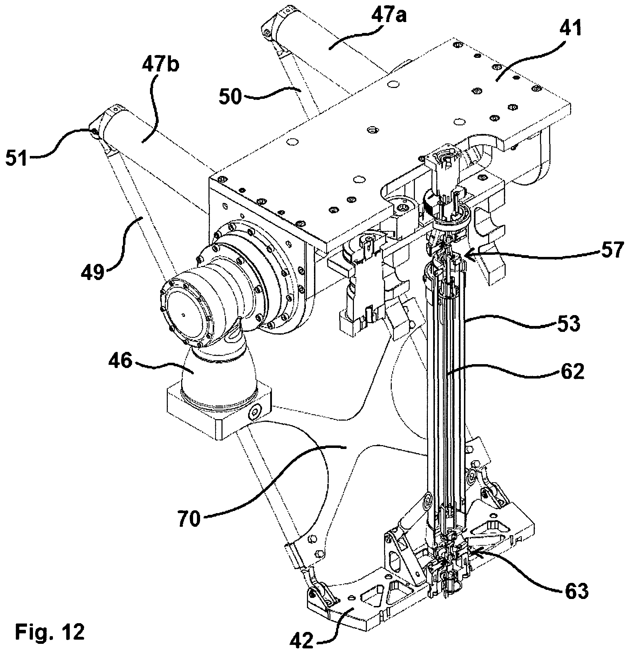

In den Figuren 11 und 12 ist ein zweites Ausführungsbeispiel eines Industrieroboters 40 mit Parallelkinematik dargestellt. Im Unterschied zu dem ersten Ausführungsbeispiel weist der in Figur 11 gezeigte Industrieroboter 40 nicht drei sondern zwei Betätigungseinheiten auf. Er ist mit einer Roboterbasis 41, einem Trägerelement 42, an welchem ein Greifer, ein Werkzeug oder ein Maschinenelement angeordnet werden kann, und zwei als Steuerarme ausgebildeten Betätigungseinheiten 44 ausgestattet. Der Greifer, das Werkzeug oder das Maschinenelement sind in der Zeichnung nicht dargestellt. Jeder der zwei Betätigungseinheiten 44 ist über eine Antriebswelle 45 mit einem als Motor ausgebildeten Betätigungseinheit-Antrieb 46 verbunden. Die Betätigungseinheiten 44 weisen einen oberen Armabschnitt 47 und einem unteren Armabschnitt 48 auf. Der Oberarmabschnitt 47 weist zwei parallele Streben 47a und 47b auf, die mit ihrem einen Ende an der Antriebswelle 45 angeordnet sind. Die parallelen Streben 47a und 47b bilden ein Oberarmpaar. Der untere Armabschnitt 48 weist zwei parallel verlaufende Stangen 49 und 50 auf, die ein Unterarmpaar bilden. Die beiden Stangen 49 und 50 des unteren Armabschnitts 48 sind über Gelenke 51 an ihrem oberen Ende mit den Streben 47a und 47b des oberen Armabschnitts 47 und über Gelenke 52 mit dem Trägerelement 42 verbunden.

Genau wie das erste Ausführungsbeispiel ist der Industrieroboter gemäß zweitem Ausführungsbeispiel mit einer als Hohlkörper ausgebildeten ersten Drehachse 53 ausgestattet. An der Roboterbasis 41 ist ein erster Drehachsen-Antrieb angeordnet, der in der Zeichnung nicht erkennbar ist. Dieser erste Drehachsen-Antrieb erzeugt ein erstes Drehmoment, welches über die erste Drehachse 53 auf einen in der Zeichnung nicht dargestellten Greifer oder ein nicht dargestelltes Werkzeug oder Maschinenelement an dem Trägerelement 42 übertragen wird. Entsprechend dem ersten Ausführungsbeispiel ist die erste Drehachse 53 über ein erstes Gelenk 57 beweglich mit der Roboterbasis 41 und über ein zweites Gelenk 63 mit dem Trägerelement 42 verbunden. Die beiden Gelenke 57 und 63 sind Kardangelenke und stimmen im wesentlichen mit den entsprechenden Gelenken 17 und 23 des ersten Ausführungsbeispiels überein.

Genau wie bei dem ersten Ausführungsbeispiel ist in der ersten Drehachse 53 eine zweite Drehachse 62 angeordnet, die als Gelenkwelle ausgebildet ist. An der Roboterbasis 41 ist ein zweiter Drehachsen-Antrieb angeordnet, an den die zweite Drehachse gekoppelt ist und dessen Drehmoment die zweite Drehachse auf einen Greifer, ein Werkzeug oder ein Maschinenelement an dem Trägerelement 42 überträgt. Die zweite Drehachse ist in Figur 12 erkennbar. Der zweite Drehachsen-Antrieb ist in der Zeichnung nicht erkennbar.

Ein erster zweiarmiger Hebel 64 ist mit dem Streben 47a und 47b des Oberarmabschnitts 47 der linken Betätigungseinheit 44 verbunden. Ein erster Arm dieses ersten Hebels 64 ist über Streben 65 und 66 mit dem Trägerelement 42 verbunden. Ein zweiter Arm des ersten Hebels 64 ist über Streben 67 und 68 mit einem zweiten Hebel 69 verbunden. Dieser zweite Hebel 69 ist als einarmiger Hebel ausgebildet. Während das eine Ende des zweiten Hebels 69 mit den Streben 67, 68 verbunden ist, ist das andere Ende des zweiten Hebels 69 mit der Antriebswelle 45 der rechten Betätigungseinheit 44 verbunden. Der erste Hebel 64, der zweite Hebel 69 und die Streben 65, 66, 67, 68 sorgen dafür, dass das Trägerelement 42 stets parallel zu der Roboterbasis 41 ausgerichtet ist, unabhängig von der Bewegung und der Einstellung der Betätigungseinheiten 44. Auf diese Weise wird ein Verkippen des Trägerelements 42 verhindert.

Figur 12 zeigt den Industrieroboter gemäß Figur 11 in einem Vertikalschnitt entlang der Längsachse der vertikal ausgerichteten ersten Drehachse 53. In dieser Darstellung ist die zweite Drehachse 62 erkennbar, die koaxial zu der ersten Drehachse 53 in der ersten Drehachse 53 angeordnet ist. Der Durchmesser der zweiten Drehachse 62 ist kleiner als der Durchmesser der ersten Drehachse 53. Die zweite Drehachse 62 erstreckt sich durch die erste Drehachse 53, der erste Gelenk 57 und das zweite Gelenk 63 hindurch. An dem nach oben und unten über die erste Drehachse überstehenden Ende ist die zweite Drehachse mit Wellengelenken ausgestattet.

Der in Figur 12 dargestellte Industrieroboter ist mit einem Verstärkungskreuz 70 ausgestattet, welches an den Stangen 49 und 50 des unteren Armabschnitts 48 angeordnet ist.

Sämtliche Merkmale der Erfindung können sowohl einzeln als auch in beliebiger Kombination miteinander erfindungswesentlich sein.

### Bezugszahlen

- 1: Roboterbasis
- 2: Trägerelement
- 3 4: Betätigungseinheit
- 5: Antriebswelle
- 6: Betätigungseinheit-Antrieb
- 7: oberer Armabschnitt
- 8: unterer Armabschnitt
- 9: Stange
- 10: Stange
- 11: Gelenk
- 12: Gelenk
- 13: erste Drehachse
- 14: erster Drehachsen-Antrieb
- 15: Rohr
- 16: Rohr
- 17: erstes Gelenk
- 18: Gelenkgabel
- 19: Gelenkgabel
- 20: Achse
- 21: Achse
- 22: zweite Drehachse
- 23: zweites Gelenk
- 24: Zahnriemen
- 25: Wellenstummel
- 26: Ring
- 27: erstes Wellengelenk
- 28: Gelenkgabel
- 29: zweites Wellengelenk
- 30: zweiter Wellenstummel
- 31: Gelenkgabel
- 40: Industrieroboter
- 41: Roboterbasis
- 42: Trägerelement
- 44: Betätigungseinheit
- 45: Antriebswelle
- 46: Betätigungseinheit-Antrieb
- 47: oberer Armabschnitt 47a Strebe
- 47b: Strebe
- 48: unterer Armabschnitt
- 49: Stange
- 50: Stange
- 51: Gelenk
- 52: Gelenk
- 53: erste Drehachse
- 57: erstes Gelenk
- 62: zweite Drehachse
- 63: zweites Gelenk
- 64: erster Hebel
- 65: Strebe
- 66: Strebe
- 67: Strebe
- 68: Strebe
- 69: zweiter Hebel
- 70: Verstärkungskreuz

## Patentansprüche

1. Industrieroboter mit Parallelkinematik
mit einer Roboterbasis (1, 41),
mit einem Trägerelement (2, 42) zur Aufnahme eines Greifers, eines Werkzeugs oder eines Maschinenelements,
mit mindestens zwei beweglichen Betätigungseinheiten (4, 44), die mit ihrem einen Ende mit an der Roboterbasis (1, 41) angeordneten Betätigungseinheit-Antrieben (6, 46) verbunden sind, und deren anderes Ende mit dem Trägerelement (2, 42) beweglich verbunden ist,
mit einer als Hohlkörper ausgebildeten ersten Drehachse (13, 53), welche einen in axialer Richtung verlaufenden durchgängigen Hohlraum aufweist, mit einem einen durchgängigen Hohlraum aufweisenden ersten Gelenk (17, 57) mit mehreren Freiheitsgraden, über welches die erste Drehachse (13, 53) mittelbar oder unmittelbar mit der Roboterbasis (1, 41) verbunden ist,
mit einem einen durchgängigen Hohlraum aufweisenden zweiten Gelenk (23, 63) mit mehreren Freiheitsgraden, über welches die erste Drehachse (13, 53) mit dem Trägerelement (2, 42) beweglich verbunden ist,
wobei die Hohlräume des ersten Gelenks (17, 57), der ersten Drehachse (13, 53) und des zweiten Gelenks (23, 63) einen durchgängigen Kanal von der Roboterbasis (1, 41) bis zu dem Trägerelement (2, 42) bilden,
mit einem ersten Drehachsen-Antrieb (14) an der Roboterbasis (1, 41), welcher ein erstes Drehmoment erzeugt,
wobei der erste Drehachsen-Antrieb (14) an die erste Drehachse (13, 53) gekoppelt ist, welche das erste Drehmoment auf einen Greifer, ein Werkzeug oder ein Maschinenelement an dem Trägerelement (2, 42) überträgt,
mit einer als Gelenkwelle ausgebildeten zweiten Drehachse (22, 62), welche zumindest teilweise in dem durchgängigen Kanal angeordnet ist, mit einem zweiten Drehachsen-Antrieb an der Roboterbasis (1, 41), welcher ein zweites Drehmoment erzeugt, wobei der zweite Drehachsen-Antrieb an die zweite Drehachse (22, 62) gekoppelt ist, welche das zweite Drehmoment auf einen Greifer, ein Werkzeug oder ein Maschinenelement an dem Trägerelement (2, 42) überträgt.

2. Industrieroboter nach Anspruch 1, **dadurch gekennzeichnet, dass** die zweite Drehachse (22, 62) eine Antriebswelle mit mindestens zwei Wellengelenken (27, 29) mit mehreren Freiheitsgraden und einer längenvariablen Zwischenwelle ist.

3. Industrieroboter nach einem der vorhergehenden Ansprüche, **dadurch gekennzeichnet, dass** die erste Drehachse (13, 53) längenvariabel ist.

4. Industrieroboter nach Anspruch 3, **dadurch gekennzeichnet, dass** die erste Drehachse (13, 53) mindestens zwei teleskopartig ineinander verschiebbare Rohre (15, 16) aufweist.

5. Industrieroboter nach einem der vorhergehenden Ansprüche, **dadurch gekennzeichnet, dass** die zweite Drehachse (22, 62) längenvariabel ist und mindestens zwei teleskopartig ineinander verschiebbare Rohre aufweist, und dass die beiden Rohre verdrehsicher ineinander anordnet sind.

6. Industrieroboter nach einem der vorhergehenden Ansprüche, **dadurch gekennzeichnet, dass** die zweite Drehachse (22, 62) als länglicher Hohlkörper mit in axialer Richtung verlaufendem, durchgängigem Hohlraum ausgebildet ist, der zusammen mit an der zweiten Drehachse (22, 62) angeordneten hohlen Wellengelenken (27, 29) einen durchgängigen Kanal von der Roboterbasis(1, 41) bis zum Trägerelement (2, 42) bildet.

7. Industrieroboter nach Anspruch 6, **dadurch gekennzeichnet, dass** in dem durchgängigen Kanal der zweiten Drehachse (22, 62) zumindest teilweise eine dritte Drehachse angeordnet ist, dass an der Roboterbasis ein dritter Drehachsen-Antrieb angeordnet ist, welcher ein drittes Drehmoment erzeugt, und dass der dritte Drehachsen-Antrieb an die dritte Drehachse gekoppelt ist, welche das dritte Drehmoment auf einen Greifer, ein Werkzeug oder ein Maschinenelement an dem Trägerelement (2, 42) überträgt.

8. Industrieroboter nach einem der vorhergehenden Ansprüche, **dadurch gekennzeichnet, dass** die Drehachsen (13, 22, 53) koaxial angeordnet sind.

9. Industrieroboter nach einem der Ansprüche 1 bis 6, **dadurch gekennzeichnet, dass** mehrere zweite Drehachsen (22, 62) zumindest abschnittsweise parallel nebeneinander in der ersten Drehachse (13, 53) angeordnet sind.

10. Industrieroboter nach einem der vorhergehenden Ansprüche, **dadurch gekennzeichnet, dass** in dem durchgängigen Kanal der ersten Drehachse (13, 53) mindestens eine pneumatischen und/ oder hydraulische und/ oder elektrische und/ oder optische Versorgungsleitung für einen an dem Trägerelement (2, 42) angeordneten Greifer, ein an dem Trägerelement (2, 42) angeordnetes Werkzeug oder ein an dem Trägerelement (2, 42) angeordneten Maschinenelement angeordnet ist.

## Claims

1. Industrial robot with parallel kinematics
with a robot base (1, 41),
with a carrier element (2, 42) for holding a gripper, a tool or a machine element,
with at least two moveable actuating units (4, 44) that are connected at one end to the actuating unit drives (6, 46) arranged on the robot base (1, 41) and are moveably connected at the other end to the carrier element (2, 42),
with a first rotational axis (13, 53) in the form of a hollow body which has a continuous, axially-running cavity,
with a first joint (17, 57) which has a continuous cavity and with several degrees of freedom by means of which the first rotational axis (13, 53) is connected directly or indirectly to the robot base (1, 41),
with a second joint (23, 63) which has a continuous cavity and with several degrees of freedom by means of which the first rotational axis (13, 53) is moveably connected to the carrier element (2, 42),
whereby the cavities of the first joint (17, 57), the first rotational axis (13, 53) and the second joint (23, 63) form a continuous channel from the robot base (1, 41) to the carrier element (2, 42),
with a first rotational axis drive (14) on the robot base (1, 41) which generates a first torque,
whereby the first rotational axis drive (14) is linked to the first rotational axis (13, 53), which transmits the first torque to a gripper, a tool or a machine element on the carrier element (2, 42),
with second rotational axis (22, 62) in the form of a universal shaft which is at least partially arranged in the continuous channel,
with a second rotational axis drive on the robot base (1, 41) which generates a second torque, whereby the second rotational axis drive is linked to the second rotational axis (22, 62), which transmits the second torque to a gripper, a tool or a machine element on the carrier element (2, 42).

2. Industrial robot according to claim 1, **characterised in that** the second rotational axis (22, 62) is a drive shaft with at least two universal joints (27, 29) having several degrees of freedom and a variable-length intermediate shaft.

3. Industrial robot according to one of the previous claims, **characterised in that** the first rotational axis (13, 53) is variable in length.

4. Industrial robot according to claim 3, **characterised in that** the first rotational axis (13, 53) has at least two tubes (15, 16) that can be displaced within one another in a telescopic manner.

5. Industrial robot according to one of the previous claims, **characterised in that** the second rotational axis (22, 62) is variable in length and has at least two tubes that can be displaced within one another in a telescopic manner and that the two tubes are arranged inside one another secured against twisting.

6. Industrial robot according to one of the previous claims, **characterised in that** the second rotational axis (22, 62) takes the form of an elongated hollow body with a continuous cavity running in the axial direction that together with hollow universal joints (27, 29) arranged on the second rotational axis (22, 62) forms a continuous channel from the robot base (1, 41) to the carrier element (2, 42).

7. Industrial robot according to claim 6, **characterised in that** a third rotational axis is arranged at least partially in the continuous channel of the second rotational axis (22, 62), that a third rotational axis drive which generates a third torque is arranged on the robot base and that the third rotational axis is linked to the third rotational axis drive which transmits the third torque to a gripper, a tool or a machine element on the carrier element (2, 42).

8. Industrial robot according to one of the previous claims, **characterised in that** the rotational axes (13, 22, 53) are arranged coaxially.

9. Industrial robot according to one of claims 1 to 6, **characterised in that** several second rotational axes (22, 62) are arranged at least sectionally parallel to one another in the first rotational axis (13, 53).

10. Industrial robot according to one of the previous claims, **characterised in that** at least one pneumatic and/or hydraulic and/or electric and/or optical supply line for a gripper arranged on the carrier element (2, 42), a tool arranged on the carrier element (2, 42) or a machine element arranged on the carrier element (2, 42) is arranged in the continuous channel of the first rotational axis (13, 53).

## Revendications

1. Robot industriel à cinématique parallèle
comprenant une base (1, 41 ),
un élément porteur (2, 42) pour recevoir une pince, un outil ou un élément de la machine,
au moins deux unités d'actionnement (4, 44) mobiles qui sont reliées par une de leurs extrémités aux entraînements de l'unité d'actionnement (6, 46) disposés sur la base (1, 41) et par l'autre extrémité à l'élément porteur (2, 42) de façon mobile,
un premier axe de rotation (13, 53) formant un corps creux qui présente une cavité traversante dans le sens axial,
une première articulation (17, 57) présentant une cavité traversante et plusieurs niveaux de liberté par laquelle le premier axe de rotation (13, 53) est relié directement ou indirectement à la base (1, 41),
une deuxième articulation (23, 63) présentant une cavité traversante et plusieurs niveaux de liberté par laquelle le premier axe de rotation (13, 53) est relié à l'élément porteur (2, 42) de façon mobile,
les corps creux de la première articulation (17, 57), du premier axe de rotation (13, 53) et de la deuxième articulation (23, 63) formant un canal continu de la base (1, 41) jusqu'à l'élément porteur (2, 42),
avec un premier entraînement d'axe de rotation (14) sur la base (1, 41) qui génère un premier couple,
le premier entraînement d'axe de rotation (14) étant couplé au premier axe de rotation (13, 53) qui transmet le premier couple à une pince, un outil ou un élément de la machine sur l'élément porteur (2, 42),
avec un deuxième axe de rotation (22, 62) formant une articulation qui est disposé au moins en partie dans le canal continu,
avec un deuxième entraînement d'axe de rotation sur la base (1, 41) qui génère un deuxième couple, le deuxième entraînement d'axe de rotation étant couplé au deuxième axe de rotation (22, 62) qui transmet le deuxième couple à une pince, un outil ou un élément de la machine sur l'élément porteur (2, 42).

2. Robot industriel selon la revendication 1, **caractérisé en ce que** le deuxième axe de rotation (22, 62) est un arbre d'entraînement avec au moins deux joints de Cardan (27, 29), avec plusieurs niveaux de liberté et un arbre intermédiaire réglable en longueur.

3. Robot industriel selon l'une quelconque des revendications précédentes, **caractérisé en ce que** le premier axe de rotation (13, 53) est réglable en longueur.

4. Robot industriel selon la revendication 3, **caractérisé en ce que** le premier axe de rotation (13, 53) présente au moins deux tubes (15, 16) coulissant l'un dans l'autre à la façon d'un télescope.

5. Robot industriel selon l'une quelconque des revendications précédentes, **caractérisé en ce que** le deuxième axe de rotation (22, 62) est réglable en longueur et présente au moins deux tubes coulissant l'un dans l'autre à la façon d'un télescope et **en ce que** les deux tubes sont disposés l'un dans l'autre sans pouvoir tourner.

6. Robot industriel selon l'une quelconque des revendications précédentes, **caractérisé en ce que** le deuxième axe de rotation (22, 62) forme un corps creux longitudinal avec une cavité traversante dans le sens axial, ladite cavité formant, avec des joints Cardan (27, 29) creux disposés sur le deuxième axe de rotation (22, 62), un canal continu depuis la base (1, 41) jusqu'à l'élément porteur (2, 42).

7. Robot industriel selon la revendication 6, **caractérisé en ce qu'**un troisième axe de rotation est disposé au moins en partie dans le canal continu du deuxième axe de rotation (22, 62), **en ce qu'**un troisième entraînement d'axe de rotation est disposé sur la base, générant un troisième couple, et **en ce que** le troisième entraînement d'axe de rotation est couplé au troisième axe de rotation qui transfère le troisième couple à une pince, un outil ou un élément de la machine sur l'élément porteur (2, 42).

8. Robot industriel selon l'une des revendications précédentes, **caractérisé en ce que** les axes de rotation (13, 22, 53) sont disposés de manière coaxiale.

9. Robot industriel selon l'une des revendications 1 à 6, **caractérisé en ce que** plusieurs deuxièmes axes de rotation (22, 62), du moins certaines parties, sont disposés à côté, parallèlement, dans le premier axe de rotation (13, 53).

10. Robot industriel selon l'une quelconque des revendications précédentes, **caractérisé en ce qu'**au moins une conduite/un câble d'alimentation pneumatique et/ou hydraulique et/ou électrique et/ou optique pour une pince disposée sur l'élément porteur (2, 42), un outil disposé sur l'élément porteur (2, 42) ou un élément de la machine disposé sur l'élément porteur (2, 42) est disposé(e) dans le canal continu du premier axe de rotation (13, 53).
